# EUROPEAN PATENT APPLICATION

(11) **EP 1 717 776 A2**
(43) Date of publication of application: **02.11.2006**
(21) Application number: 06113095.1
(22) Date of filing: 25.04.2006
(51) Int. Cl.: G08C 23/04

(54) **Display apparatus and method for providing control function of an universal remote control**

(30) Priority: 27.04.2005 KR 20050035087
(71) Applicant: Samsung Electronics Co., Ltd., Suwon-si 442-742 Gyeonggi-Do (KR)
(72) Inventor: Chang, Woo-yong, c/o 102-503 Samsung Myeongga Town, Gyeonggi-do (KR); Kim, Dong-seok, 703-601 Jindeok APT, Gyeonggi-do (KR); Eo, Kil-su, Songpa-gu, Seoul (KR); Chun, Kyong-joon, Dogok 2-dong, Gangnam-gu, Seoul (KR)
(74) Representative: Robinson, Ian Michael

(57) **Abstract**

A display apparatus (220) and a method are provided for extracting a preset control code by analyzing a standard control code of a standard remote control received through infrared communication, and providing a function of universal remote control to user to control a concerned slave device (230) using the extracted control code. A display apparatus (220) that provides functions of a universal remote control includes a standard control code receiving unit (310) that receives standard control codes, a code conversion unit (350) that confirms the type of a stored slave device (230) to be controlled, according to a received slave device setting signal, and that converts the received standard control code into an individual control code by referencing a pre-stored code mapping table, and an individual code transmitting unit (360) that transmits the individual control code to the slave device (230).

## Description

Apparatuses and methods consistent with the present invention relate to a function of a universal remote control.

A related art infrared transceiving module, which is internally installed in a variety of communication and digital apparatuses, can process signals to transceive data wirelessly in local areas. Remote control technology has been applied to related art peripheral devices such as a television (TV) set and a video cassette recorder (VCR); further, this technology has been extensively applied to electronic systems for industrial purposes, interactive TVs, notebook computers, personal computers (PCs), digital cameras and mobile communication terminals. As such, the related art remote control is utilized extensively.

Most related art audio and video devices include remote controls. A related art universal remote control to control a plurality of peripheral devices has also been introduced.

Remotes can control peripheral devices such as a TV set, an audio system, a digital versatile disk (DVD) player, a VCR, a set-top box, an air-conditioner, an air cleaner, a lighting apparatus, and others. An early related art universal remote control transmitted a pre-stored control code to control a specific peripheral device, but there is also a related art universal remote control capable of copying remote control functions of the specific peripheral device using machine learning.

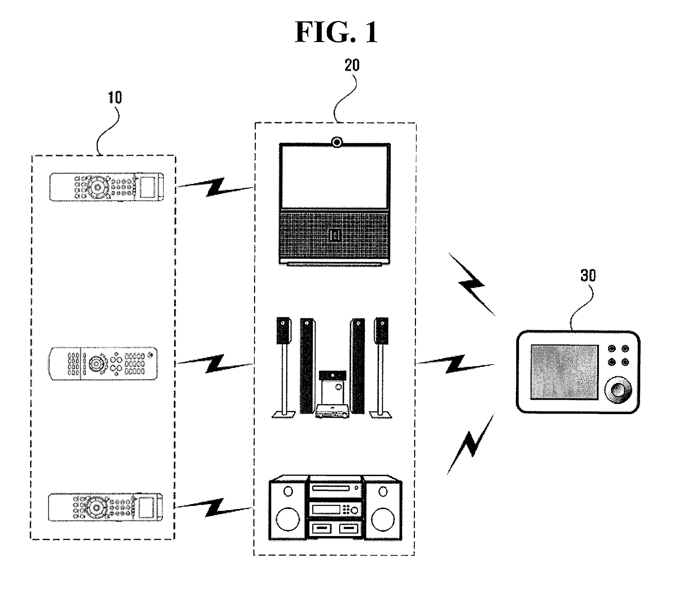

Figure 1 illustrates the related art concept of individual remote controls and a universal remote control. As described above, most related art audio and video apparatuses 20 include individual remote controls 10. Usually, each of the individual remote controls 10 can control only the concerned peripheral device. Some of them may control, in a limited manner, several peripheral devices manufactured by the same maker.

A related art universal remote control 30 can control various peripheral devices produced by the same maker, and it can select a remote control function pre-stored in the universal remote control 30 for controlling a peripheral device produced by a different maker, or it can control the peripheral product produced by the different maker by separately adding a remote control function therefor.

The user can remotely control a peripheral device made by a different maker or add a separate function, by using a button or a display unit of the universal remote control 30. When the display unit has a touch screen, the user may use the touch screen to control the concerned peripheral device. To select or add a remote control function, the display unit must be used. The display unit of the universal remote control 30 generally employs a liquid crystal display (LCD) window, which increases the production cost of the universal remote control 30.

Japanese Unexamined Patent Publication No. 2001-128263 discloses a related art device control apparatus, in which a remote control transmits a control command to a master control device, converts the control command that the master device receives into a control command through a search to control a slave device, and transmits the converted command control to the slave device. It is assumed that the master device and the slave device are connected in a wired manner (e.g., IEEE 1304), and thus, there is a restriction on how the slave device can be structured. The control command for the separate slave device can be stored and updated, but no display unit for these operations is provided.

According to the present invention there is provided an apparatus and method as set forth in the appended claims. Preferred features of the invention will be apparent from the dependent claims, and the description which follows.

Apparatuses and methods consistent with the present invention relate to a display apparatus and a method for extracting a preset control code by analyzing a standard control code of a standard remote control received through infrared communication, and providing a function of universal remote control to user to control a concerned slave device using the extracted control code.

An aspect of the present invention extracts an individual control code corresponding to a received standard control code for a standard remote control, from inherently installed individual control codes for peripheral devices by maker, and controls the concerned peripheral device using the extracted code.

Another aspect of the present invention allows a user to establish a mapping relation of the standard control code to the individual control code for a peripheral device through a screen of a display apparatus.

The present invention shall not be limited to the aspects described above. Any other aspect(s) not described herein shall be clearly understood by those skilled in the art from at least the descriptions stated below.

According to an aspect of the present invention, there is provided a display apparatus that provides functions of a universal remote control which comprises a standard control code receiving unit to receive standard control codes, a code conversion unit to confirm the type of a stored slave device to be controlled, according to a received slave device setting signal, and to convert the received standard control code into an individual control code by referencing a pre-stored code mapping table, and an individual code transmitting unit to transmit the individual control code to the slave device.

According to another aspect of the present invention, there is provided a remote control device which comprises a storage unit to store a code mapping table, a button unit to receive a button input signal, a standard control code extracting unit to extract a standard control code corresponding to the received button input signal by referencing the stored code mapping table, and a standard control code transmitting unit to transmit the extracted standard control code.

According to yet another aspect of the present invention, there is provided a method that provides functions of a universal remote control which comprises receiving a setting signal to set a slave device to be controlled, storing information on the slave device according to the received signal, receiving a standard control code, confirming stored information on the slave device and converting the received standard control code into an individual control code by referencing a stored predetermined code mapping table, and transmitting the individual control code to the slave device.

The above and/or other aspects of the present invention will become more apparent by describing exemplary embodiments thereof with reference to the attached drawings in which:
Figure 1 illustrates the related art concept of conventional remote controls and a universal remote control.
Figure 2 illustrates the concept of controlling peripheral devices using a display apparatus that provides remote control functions according to an exemplary embodiment of the present invention;
Figure 3 is a block diagram illustrating a display apparatus that provides remote control functions according to an exemplary embodiment of the present invention;
Figure 4 is a block diagram illustrating a standard remote control that sends a standard control code according to an exemplary embodiment of the present invention;
Figure 5 is a code mapping table that represents relations between standard control codes and individual control codes according to an exemplary embodiment of the present invention;
Figure 6 is a table that represents peripheral devices corresponding to buttons of a standard remote control according to an exemplary embodiment of the present invention;
Figure 7 illustrates mapping of peripheral devices to buttons of a standard remote control according to an exemplary embodiment of the present invention;
Figure 8 is a flow chart illustrating a process of providing remote control functions according to an exemplary embodiment of the present invention; and
Figure 9 illustrates a concept of controlling slave devices through a screen of a display apparatus according to an exemplary embodiment of the present invention.
Hereinafter, exemplary embodiments of the present invention will be described in detail with reference to the accompanying drawings. The present invention and methods of accomplishing the same may be understood more readily by reference to the following detailed description of exemplary embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

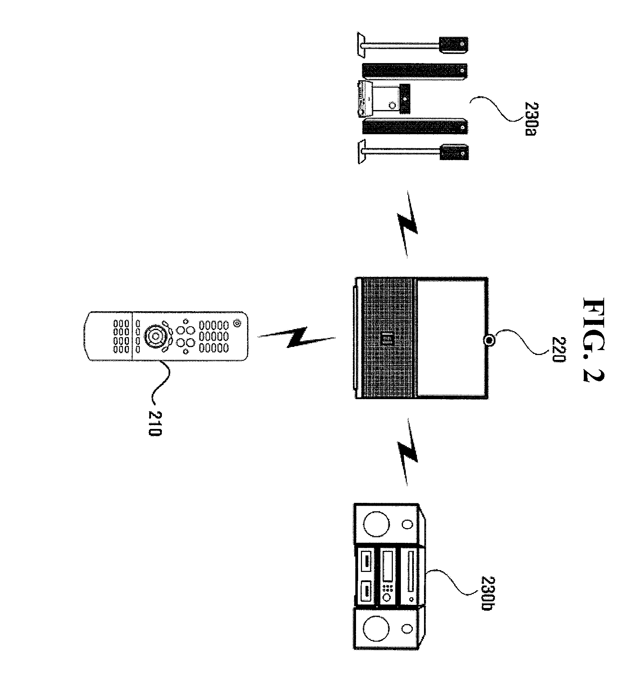

Figure 2 illustrates the concept of controlling peripheral devices using a display apparatus that provides remote control functions according to an exemplary embodiment. The display apparatus 220 that functions as a universal remote control may be a TV set, and a separate standard remote control 210 capable of sending standard control codes may be used as the remote control. However, the present invention is not limited thereto, and any other display apparatus or remote control as would be understood by one skilled in the art may be substituted therefore.

Standard control codes are common codes of peripheral devices that are associated with common operations, and are respectively assigned to buttons of standard remote controls by a manufacturer, independent of the kind of peripheral device.

The standard remote control 210 stores standard control codes to control common operations between the peripheral devices 230a and 230b. Using a button of the standard remote control 210, the user sets a peripheral device to be controlled ("slave device"), and transmits a standard control code to the set peripheral device.

Common codes to control common operations apply to power supply and power interruption, and others, which are common operations in both the peripheral devices 230a and 230b, and which do not differ by manufacturer and model. Accordingly, the standard remote control 210 does not store individual control codes of each peripheral devices; the standard remote control 210 only stores standard control codes, and when a signal is input via a button, the standard remote control 210 transmits a standard control code corresponding to the input signal.

Peripheral devices set to be controlled, that is, slave devices, refer to devices that a user can control. Prior to transmission of a standard control code using the standard remote control, the user first sets a peripheral device to be controlled, among the plurality of peripheral devices. Information on the slave peripheral device, including the name of the slave device and the storage position of each individual control code, may be stored in a display apparatus 220. Upon receiving the standard control code transmitted by the standard remote control 210, the display apparatus 220 checks information on the peripheral slave device, and converts the received standard control code into an individual control code, and then transmits the individual control code to the concerned peripheral device.

For reference, the display apparatus 220 refers to a device that provides functions of a universal remote control according to an exemplary embodiment. For example but not by way of limitation, the display apparatus 220 may be a TV set, and not a slave device.

The individual control code is mapped to the received standard control code, which is a proper code applied to a specific peripheral device by its manufacturer. Accordingly, the display apparatus 220 may store individual control codes that have been applied to peripheral devices 230a and 230b by manufacturer. In addition, the display apparatus 220 may have a means to update the information stored therein; that is, means to add, delete or modify information.

The user can control the peripheral devices 230a and 230b using both the display apparatus that functions as a universal remote control 30, and the standard remote control 210. To set a slave device or control the set slave device, a screen of the display apparatus 220 can be used. In other words, the standard remote control 210 may not have a separate display unit; in this case, it may be difficult to set a slave device from the list of peripheral devices stored in the display apparatus 220. In addition, the standard remote control 210 has a limited number of buttons, and may not include buttons for both the peripheral devices 230a and 230b. At this time, the user can control the peripheral devices using the image buttons displayed on the screen.

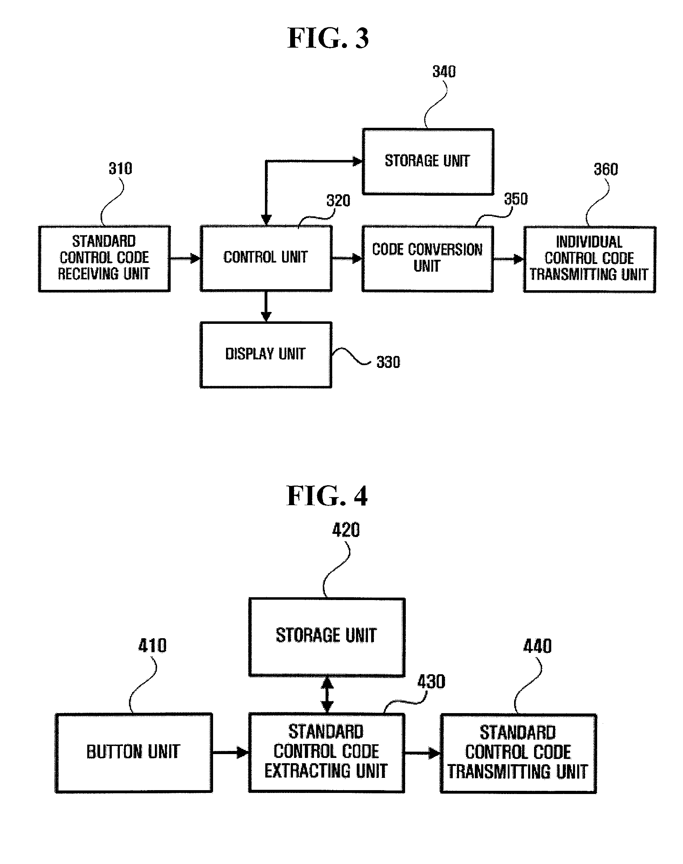

Figure 3 is a block diagram illustrating a display apparatus that provides remote control functions according to an exemplary embodiment. The display apparatus 220 comprises a standard control code receiving unit 310, a control unit 320, a display unit 330, a storage unit 340, a code conversion unit 350, and an individual control code transmitting unit 360.

The storage unit 340 stores standard control codes, a list of peripheral devices and individual control codes of the peripheral devices included in the list.

When an individual control code, which is for a specific device and which is mapped to a standard control code, is stored, the specific device refers to a peripheral slave device. The storage unit 340 stores a list of peripheral devices and individual control codes for each peripheral device. The individual control codes are applied only to specific peripheral devices by manufacturer. Accordingly, in order to control a specific peripheral device, an individual control code relevant to the specific peripheral device may be pre-stored, although the present invention is not limited thereto.

The standard control codes, including (but not limited to) a list of peripheral devices and individual control codes for the peripheral devices included in the list, which are stored in the storage unit 340, can be added, deleted, modified or updated, according to replacement of the standard remote control or addition of a new device.

The standard control code receiving unit 310 receives a standard control code from the standard remote control 210 using at least one of communication means, such as infrared communication, Bluetooth or wireless Internet. The received standard control code is transmitted to the code conversion unit 350 after being checked by the control unit 320.

The code conversion unit 350 checks the device set as a slave device in the list of peripheral devices stored in the storage unit 340, and converts the standard control code transmitted from the standard control code receiving unit 310 into an individual control code corresponding thereto by referencing the code mapping table. Accordingly, that information on the device set as a slave device and information on the code mapping table may be stored in the storage unit 340.

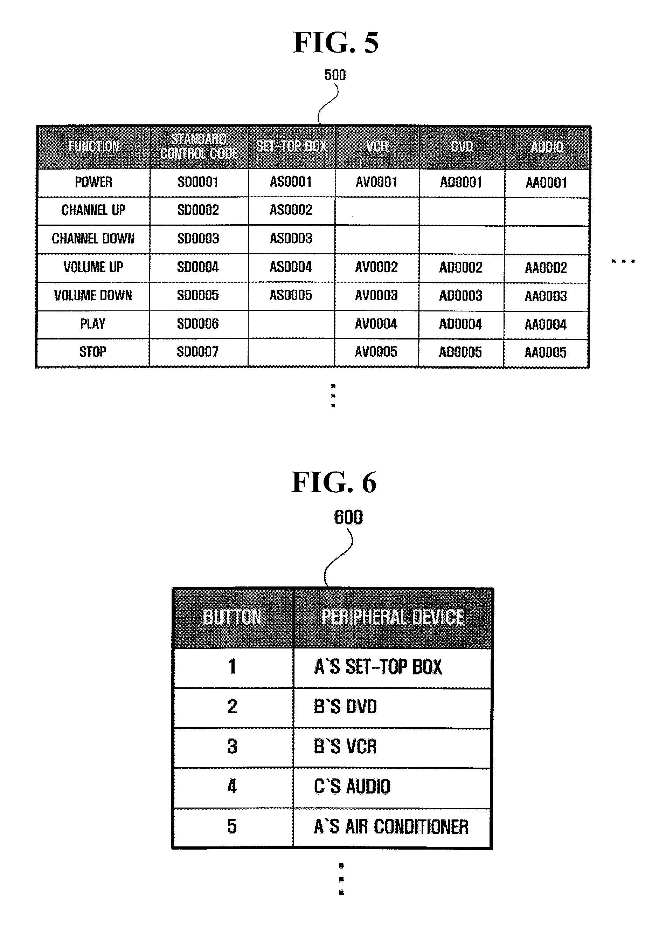

The code mapping table is a table to map the standard control codes to individual control codes of each peripheral device, which will be described later in detail with reference to Figure 5.

The user may set a slave device using the standard control code 210. Number buttons of the standard remote control 210 may be mapped to slave devices. For example but not by way of limitation, the #1 button may be mapped to a DVD player, and the #2 button may be mapped to an audio system. By depressing the #1 button and then a control button (e.g., power, play, pause or stop buttons), standard control codes to control the DVD player can be transmitted.

The individual control code transmitting unit 360 transmits individual control codes extracted by the code conversion unit 350 to a device set to be controlled. Like the standard control code receiving unit 310, the individual control code transmitting unit 360 can transmit individual control codes using at least one wireless communication means such as infrared communication, Bluetooth or wireless Internet, or wired communication means such as: RS-232, a USB, IEEE 1394. Accordingly, the slave device may have a wireless or wired communication means, and the means may vary according to the slave device.

The display unit 330 displays the list of peripheral devices on the screen. As described above, when individual control codes (for specific devices) mapped to standard control codes are stored in the storage unit 340, the specific devices correspond to peripheral devices. The user may select a slave device to control using the standard remote control 210. To map the buttons of the standard remote control 210 to peripheral devices, a peripheral device is confirmed through the screen and then mapped to the corresponding button. The user may map a button of the standard remote control 210 to the corresponding peripheral device using the list of peripheral devices displayed on the screen of the display unit 330.

The slave device can be controlled via the display unit 330. That is, the user can control specific functions of the slave device, which cannot be embodied by buttons of the standard remote control 210, e.g., an equalizer of an audio system, using image buttons displayed on the screen.

The user can update the standard control codes, the list of peripheral devices, and the individual control codes of peripheral devices stored in the storage unit 340, using information displayed on the display unit, in order to add, delete or modify them.

The control unit 320 generally controls the standard control code receiving unit 310, the display unit 330, the storage unit 340, the code conversion unit 350, the individual control code transmitting unit 360 and the display apparatus 220.

Figure 4 is a block diagram illustrating a standard remote control that sends a standard control code according to an exemplary embodiment. The standard remote control 210 comprises a storage unit 420, a button unit 410, a standard control code extracting unit 430 and a standard control code transmitting unit 440.

The storage unit 420 stores the code mapping table. The code mapping table is a set of standard control codes that are common codes to control common operations of peripheral devices, which may be determined and stored when the standard remote control is manufactured, and which may be updated.

The button unit 410 receives a signal input by the user (hereinafter referred to as a "button input signal"). The received button input signal is mapped to a standard control code stored in the storage unit 420. The mapping relations may be modified later by the user through the display unit 330 of the display apparatus 220. The received button input signal is transmitted to the standard control code extracting unit 430.

The standard control code extracting unit 430 extracts the standard control code mapped to the button input signal transmitted by the button unit 410 by referencing the standard control code table stored in the storage unit 420. Accordingly, the storage unit 420 can store the standard control code table that defines relations between button input signals and standard control codes. The standard control code extracting unit 430 can extract from the table standard control codes mapped to the transmitted button input signals.

The standard control code transmitting unit 440 transmits standard control codes extracted by the standard control code extracting unit 430 to the display apparatus 220, using at least one communication means such as infrared communication, Bluetooth or wireless Internet.

Figure 5 is a code mapping table that represents relations between standard control codes and individual control codes according to an exemplary embodiment. The individual control codes are applied only to operations of specific peripheral devices, which may vary by manufacturer and peripheral device. Even when a device is made by one manufacturer, e.g., a DVD player made by manufacturer A, the individual control codes may differ by model. (Various models of DVD players may be produced by manufacturer A.) Figure 5 shows a table illustrating relations between individual control codes and standard control codes of a device made by a specific maker, wherein respective peripheral devices have different individual control codes according to their functions. The functions of peripheral devices are mapped to standard control codes. Each peripheral device may or may not have the mapped function. For example but not by way of limitation, power supply and interruption are common in all peripheral devices. Thus, individual control codes therefor are assigned to all the peripheral devices. However, channel control is assigned only to a set-top box and may not be assigned to a VTR, a DVD player and an audio system.

The storage unit 340 of the display apparatus 220 stores the code mapping table shown in Figure 5 by the peripheral device model

In the code mapping table 500, the standard control codes, which are codes for common operations of peripheral devices, are mapped to each button of the standard remote control 210, and are stored in the storage unit 420 of the standard remote control 210 in the form of a standard control code table. To control a specific peripheral device, the user can set a slave device prior to transmitting a standard control code using the standard remote control 210. Information on the set slave device can be stored in the storage unit 340 of the display apparatus 220. Accordingly, the standard control code transmitted after the slave device is set is applied to the set slave device.

For reference, the code conversion unit 350 of the display apparatus 220 converts the received standard control code to the corresponding individual control code of the slave device. When no corresponding individual control code is present, the code conversion may not be conducted.

As described above, the code mapping table 500 is stored in the storage unit 340 of the display apparatus 220. In the table, the standard control codes are mapped to each button of the standard remote control 210, and stored in the storage unit 420 of the standard remote control. The storage unit 340 of the display apparatus 220 may store code mapping tables 500 associated with a plurality of different standard remote controls 210. For this reason, the display apparatus 220 may convert the standard control codes of various standard remote controls 210 into individual control codes corresponding thereto.

Figure 6 is a table representing peripheral devices corresponding to buttons of a standard remote control according to an exemplary embodiment. More specifically, peripheral devices are mapped to number buttons of the standard remote control. The peripheral devices may be mapped to separate buttons on the standard remote control 210.

The user may set one of the peripheral devices as a slave device using a number button or another button of the standard remote control 210. For this, the storage unit 340 of the display apparatus 220 can store a table 600 indicating peripheral devices corresponding to buttons of the standard remote control 210 (hereinafter referred to as the "peripheral device mapping table").

The user may directly map the buttons of the standard remote control 210 to peripheral devices through the display unit 330 of the display apparatus 200. That is, one of a plurality of peripheral devices displayed on the screen is selected and mapped to the corresponding button, and this mapping is then stored in the storage unit 340 of the display apparatus 220.

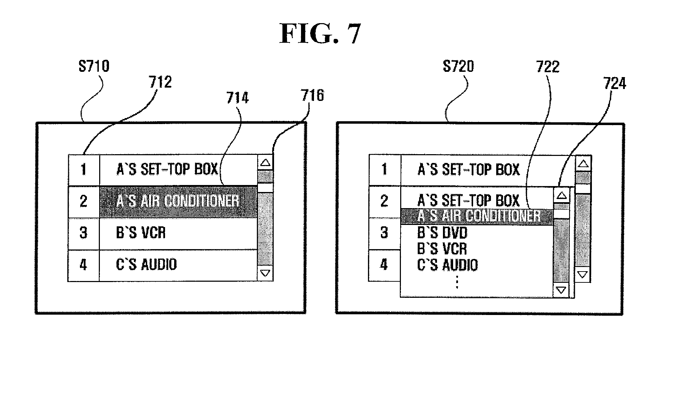

Figure 7 illustrates mapping of peripheral devices to buttons of a standard remote control according to an exemplary embodiment, wherein peripheral devices in the list are mapped to the corresponding buttons 712 of the standard remote control 210 through the display unit 330 of the display apparatus 220.

When the list of peripheral devices corresponding to the buttons of the standard remote control 210 is output on the display unit 330 of the display apparatus 220 at S710, the user can select one of the peripheral devices to add, delete or modify by moving a selector 714 using a direction button of the standard remote control 210. The user may output other peripheral devices not displayed on the screen using a scroll bar 716.

When adding, deleting or modifying a peripheral device is selected, a list of peripheral devices that can be controlled is output at S720, and the user may select or delete the peripheral device by moving the selector 722 using a direction button of the standard remote control 210. The user may also access other peripheral devices not output on the screen using the scroll bar 716.

The list of peripheral devices can be controlled, and individual control codes for them are pre-stored in the storage unit 340 and can be available for updating, that is, adding, deleting and modifying. The list of controllable peripheral devices is desirably output for each maker and each device. Since there may exist a variety of peripheral devices for each model, in connection with the same device, it is also desirable that the list include model names of the devices.

The user can easily set a slave device by transmitting a setting signal for the slave device using a button of the standard remote control 210.

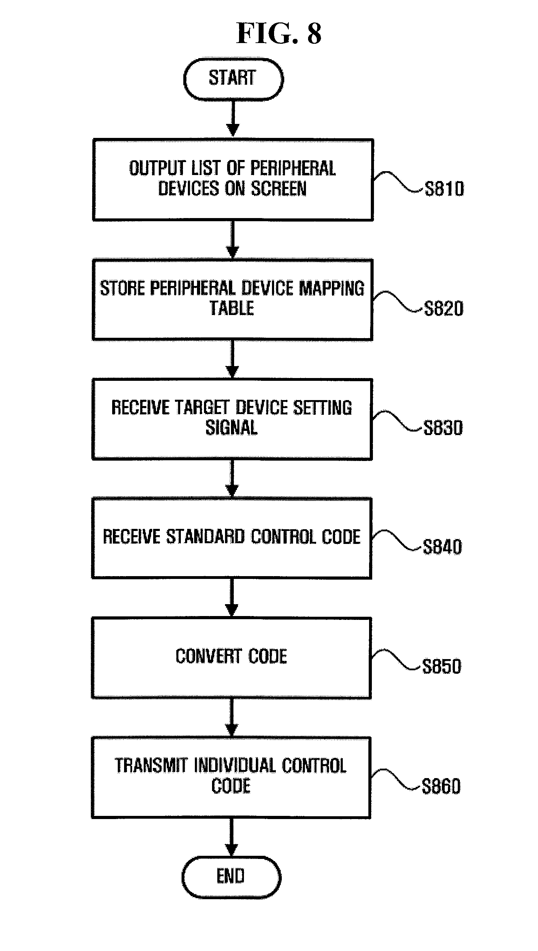

Figure 8 is a flow chart illustrating a process of providing remote control functions according to an exemplary embodiment.

A user who intends to set a slave device can set the slave device using a number button or a separate button of the standard remote control 210. It is assumed that the peripheral device mapping table 600 is pre-stored in the storage unit 340 of the display apparatus 220. Accordingly, in order to set a slave device, the user has to first prepare and store a peripheral device mapping table 600, which can be conducted through the display unit 330 of the display apparatus 220.

The display unit 330 of the display apparatus 220 outputs the list of peripheral devices on the screen S810 after receiving the standard control code of a specific button (list output button) of the standard remote control 210. When the list is displayed on the screen, the user can map the peripheral devices in the list to the buttons of the standard remote control 210, whereby the peripheral device mapping table 600 is stored in the storage unit 340 of the display apparatus 220 S820. The display apparatus receives a setting signal for a slave device from the standard remote control 210 S830, and the control unit 320 of the display apparatus 220 sets a peripheral device corresponding to the received setting signal as the slave device and stores information on the slave device in the storage unit 340. The kinds of slave devices stored in the storage unit 340 may be updated by the user. The standard control codes received after the slave device is set are applied to the preset slave device.

When the user transmits a standard control code using the standard remote control 210, the standard control code receiving unit 310 of the display apparatus 220 receives the standard control code using at least one communication means such as infrared communication, Bluetooth or wireless Internet S840. The control unit 320 confirms that the received code is the standard control code and transmits it to the code conversion unit 350.

The code conversion unit 350 that is received the standard control code from the control unit 320 first checks information on the slave device stored in the storage unit 340, and then converts the received standard control code into the corresponding individual control code for the slave device S850. The code conversion unit 350 extracts an individual control code for the concerned device by referencing the code mapping table 500 stored in the storage unit 340. If the corresponding individual control code is present, it extracts the individual control code and transmits it to the individual control code transmitting unit 360. If the corresponding individual control code is not present, the extraction is terminated.

The individual control code transmitting unit 360 that received the individual control code for the slave device from the code conversion unit 350 transmits the individual control code to the slave device using at least one of infrared communication, Bluetooth, wireless Internet, RS-232, USB and IEEE 1394 S860. The individual control code is transmitted using a wireless or wired communication means, which may be conducted differently by each peripheral device. In other words, the individual control code can be transmitted to the peripheral device using a communication means supported by it. For this, the display apparatus 220 may have a plurality of wireless or wired communication means.

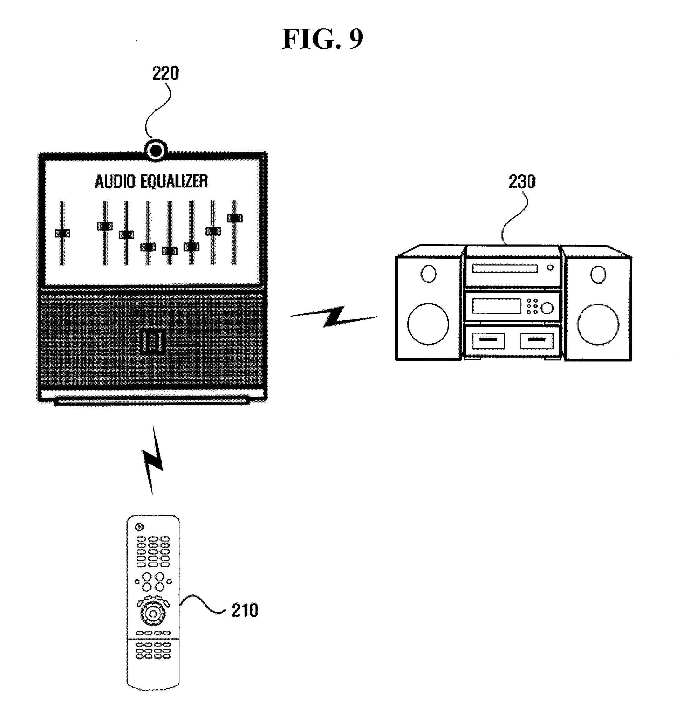

Figure 9 illustrates a concept of controlling slave devices through a screen of a display apparatus according to an exemplary embodiment.

The standard remote control 210 has a limited number of buttons, and most of the buttons, except for number buttons, are used in performing proper functions assigned thereto. Accordingly, some functions of the slave device may not be performed with resorting only to the buttons of the standard remote control 210. For example, in order to adjust the equalizer in an audio system, pre-settings can be applied using the buttons of the standard remote control 210, but it is very difficult to adjust the individual overtones of the frequencies.

Detailed control of the slave device 230 may be possible using the display unit 330. The user can control in detail functions of the device that cannot be embodied only with the buttons of the standard remote control 210 using the buttons output on the screen. In other words, those buttons that the standard remote control 210 does not have are output as button-shaped images on the display unit 330 of the display apparatus 220, and the user controls the button-shaped images using arrow buttons or OK buttons of the standard remote control 210 to control detailed functions of the slave device.

For this, the display apparatus 220 can further comprise an image button control unit (not shown). The image button control unit (not shown) controls positions, values and shapes of image buttons output on the screen according to the received standard control code.

The image buttons may be displayed on the whole screen, or on a part of the screen according to the picture in a picture (PIP) mode. The type of image buttons may be converted according to the set slave device 230 and detailed functions of the slave device 230. The image buttons output on the screen can be stored by type in the storage unit 340 of the display apparatus 220. Further, the image buttons may be updateable, depending upon addition or deletion of peripheral devices. Further, a plurality of image buttons for the same slave device can be stored.

The exemplary embodiments can be realized as computer programs that can be written on a computer-readable recording medium and thus can be executed in a computer device inside of the remote control and/or the device 220 or 230. Examples of the computer-readable recording medium include a magnetic storage medium (e.g., a ROM, a floppy disc, or a hard disc), an optical storage medium (e.g., a CD-ROM or a DVD), and a carrier wave (e.g., a data transmission through the Internet).

As described above, the display apparatus and method for providing functions of a universal remote control may produce at least one of the following effects.

First, it is possible to control a variety of peripheral devices using a single standard remote control, and make the remote control lightweight by extracting an individual control code corresponding to the received standard control code of the standard remote control, among stored individual control codes of peripheral devices by manufacturer.

Second, it is possible to reduce the production cost of the standard remote control by displaying on a display apparatus mappings of the standard control codes of the standard remote control, which has no separate display means, to the individual control codes for the peripheral device.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus (220) providing a remote control function, the display apparatus (220) comprising:
a standard control code receiving unit (310) that receives a standard control code;
a code conversion unit (350) that confirms a type of a slave device (230) to be controlled according to a received slave device setting signal, and converts the standard control code into an individual control code by referencing a pre-stored code mapping table; and
an individual code transmitting unit (360) that transmits the individual control code to the slave device (230).

2. The display apparatus (220) of claim 1, wherein the standard control code is a code that controls a common operation of peripheral devices (230).

3. The display apparatus (220) of claim 1, wherein the individual control code is applied only to a specific operation of each of a plurality of peripheral devices (230).

4. The display apparatus (220) of claim 1, 2 or 3, wherein the code mapping table comprises a table that maps the standard control codes to the individual control codes according to functions of a plurality of peripheral devices (230).

5. The display apparatus (220) of any preceding claim, wherein the standard control code receiving unit (310) receives the standard control code via at least one of infrared communication, Bluetooth and wireless Internet.

6. The display apparatus (220) of any preceding claim, wherein the individual control code transmitting unit transmits the individual control code via at least one of infrared communication, Bluetooth or wireless Internet, RS-232, USB and IEEE 1394.

7. The display apparatus (220) of any preceding claim, further comprising a storage unit (340) that stores a list including a plurality of peripheral devices (230) and at least one individual control code for each of the plurality of peripheral devices (230).

8. The display apparatus (220) of claim 7, wherein the standard control code, the list and respective ones of the individual control code for the peripheral devices (230) in the list can be added, deleted or modified.

9. A remote control device (210) comprising:
a storage unit (420) that stores a code mapping table;
a button unit (410) that receives a button input signal;
a standard control code extracting unit (430) that extracts a standard control code corresponding to the received button input signal by referencing the stored code mapping table; and
a standard control code transmitting unit (440) that transmits the extracted standard control code.

10. The device of claim 9, wherein the standard control code controls common operations of peripheral devices (230).

11. The device of claim 9 or 10, wherein the code mapping table maps the standard control code to the individual control code according to a function of a peripheral devices (230).

12. The device of claim 9, 10 or 11, wherein the standard control code transmitting unit (440) transmits the individual control codes using at least one of infrared communication, Bluetooth and wireless Internet.

13. A method of remotely controlling a device, the method comprising:
receiving a setting signal to set a slave device (230) to be controlled;
storing information on the slave device (230) according to the received signal;
receiving a standard control code;
confirming the stored information on the slave device (230) and converting the received standard control code into an individual control code by referencing a code mapping table; and
transmitting the individual control code to the slave device (230).

14. The method of claim 13, wherein the standard control code controls a common operation of peripheral devices (230).

15. The method of claim 13 or 14, wherein the individual control code is applied only to a specific operation of each of a plurality of peripheral devices (230).

16. The method of claim 13, 14 or 15, wherein the code mapping table maps the standard control code to the individual control code according to a function of a peripheral device.

17. The method of any of claims 13 to 16, wherein the receiving is conducted using at least one of infrared communication, Bluetooth and wireless Internet.

18. The method of any of claims 13 to 17, wherein transmitting is conducted using at least one of infrared communication, Bluetooth or wireless Internet, RS-232, USB and IEEE 1394.
